(19) Europäisches Patentamt
European Patent Office
Office européen des brevets

(11) **EP 2 716 341 A1**

(12) **EUROPEAN PATENT APPLICATION**

(43) Date of publication:
**09.04.2014 Bulletin 2014/15**

(21) Application number: **12187498.6**

(22) Date of filing: **05.10.2012**

(51) Int Cl.:
***B01D 1/22*** *(2006.01)*
***B01D 1/28*** *(2006.01)*
***C02F 1/04*** *(2006.01)*
***C02F 1/08*** *(2006.01)*
***F03G 7/00*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **VITO NV (Vlaamse Instelling voor Technologisch Onderzoek NV)
2400 Mol (BE)**

(72) Inventor: **Brauns, Etienne
2400 Mol (BE)**

(74) Representative: **Brants, Johan P.E.
Brantsandpatents bvba
Guldensporenpark 75
9820 Merelbeke (BE)**

# (54) Device and method for liquid treatment by mechanical vapor recompression

(57) The current invention concerns an indirect heat exchange evaporator device and method for liquid treatment by mechanical vapor recompression comprising a fixed fluid-tight evaporator housing; an inlet for feeding liquid to be evaporated into the housing and an outlet from the housing for liquid concentrated by evaporation; an outlet from the housing for discharging from said housing vapor boiled off from the liquid by evaporation; a plurality of heating elements within the housing mounted on a common horizontal axis, each of said heating elements having an outer surface for contact with said liquid to be evaporated within the housing and having an internal passage for heating medium and an element inlet and an element outlet for the heating medium, whereby said heating elements comprise an essentially hollow disc-like shape defining a heating element axis and mounted along its heating element axis on said common horizontal axis within said housing.

EP 2 716 341 A1

Printed by Jouve, 75001 PARIS (FR)

## Description

### TECHNICAL FIELD

The invention provides an indirect heat exchange evaporator device and method for liquid treatment, in particular for water desalination, by mechanical vapor recompression.

### BACKGROUND

The present invention concerns a device and method for liquid treatment by mechanical vapor recompression. The principle of mechanical vapor recompression is known. During mechanical vapor recompression, the vapor of an evaporator is recompressed to a higher pressure by means of a mechanically driven compressor. The recompressor therefore also operates as heat pump, increasing the vapor's temperature in order to enhance the heat transfer out of the compressed vapor. Contrary to the compression heat pump with circulating process liquid (i.e. a closed system, refrigeration cycle) the vapor recompressor can be considered as a special case of the compression heat pump because it operates as an open system.

After compression of the vapor and subsequent condensation of the heating steam, the condensate leaves the cycle. The heating steam (hot side) is separated from the vapor (cold side) by the heat exchange surface of the evaporator. The comparison between the open compression heat pump and the closed compression heat pump shows that the evaporator surface in the open system basically replaces the function of the expansion valve of the process liquid in the closed system.

By using a comparably small amount of energy, i.e. the mechanical energy of the compressor impeller in the case of the compression heat pump, energy is added to the process heat and continuously recycled. In this case, primary steam is not required as the heating medium. The condensation heat to be dissipated in multiple effect and thermal vapor recompression systems, is still significantly high. In a multiple-effect plant, with *n* number of effects, the condensation heat is approximately *1*/*n* of the primary energy input. Furthermore, a steam jet compressor will only recompress part of the vapor stream, and the energy of the motive steam must be dissipated as residual heat through the cooling water. However, the use of the open compression heat pump principle can significantly reduce, and even eliminate, the amount of heat to be dissipated through the condenser. A small amount of additional energy or condensation of excess vapor may be required to achieve the final heat balance, thereby allowing constant pressure ratios and stable operating conditions. Reasons for using mechanical vapor recompression are: low specific energy consumption, gentle evaporation of the product due to low temperature differences, short residence times of the product, as a single-effect system MVR is most often used, high availability of the plants due to the simplicity of the process, excellent partial load behavior and low specific operating costs.

Heat exchange in a system for MVR can occur indirectly via transfer of the heat through the surface of an evaporator. In many applications, a falling film evaporator is used.

There are presently available various indirect heat transfer falling film evaporators. The liquid is distributed to the heating surface from above and it falls down the surface as a film. There are essentially two types of heating surface used in falling film evaporators: tubes and plates.

There are basically three kinds of tubular falling film indirect heat transfer evaporators:

(1) Vertical tube evaporators in which liquid to be evaporated flows down the inside walls of vertical tubes and the heating medium is outside the tubes. Liquid and boiled off vapors are discharged into a vapor body where they are separated.

(2) Vertical tube evaporators in which liquid to be evaporated flows down the outside of vertical tubes and the heating medium is inside the tubes. Liquid and vapor are separated on the heating surface and the vapor is removed from the side of the evaporator.

(3) Horizontal tube evaporators in which liquid to be evaporated is distributed to the outer surfaces of horizontal tubes and the heating medium is inside the tubes. The evaporator housing which surrounds the heating surfaces encloses the vapor body. Liquid is removed from the bottom of the housing and boiled off vapors are discharged from the top of the housing.

There are two basic configurations for plate type indirect heat transfer falling film evaporators.

(4) Vertical plate evaporators with liquid to be evaporated flows down the outside of plate heat exchange elements and a heating medium is within the plates. A housing encloses the vapor body and liquid and vapor are separated on the heating surface.

(5) Gasketed or welded plate heat exchangers wherein alternate channels are used for a heating medium and the falling film of liquid to be evaporated. Liquid is introduced at the top of the heating surface. Concentrated liquor and boiled off vapor are discharged into a vapor body for separation.

The heating medium in these known types of evaporators is most commonly steam, but it can be any condensing vapor or a hot liquid. In liquid treatment processes such as water desalination, the heating medium can be the vaporized feed stream which is then compressed mechanically and used as heating medium in a MVR set-up.

In liquid treatment in general, and in water desalination in particular, tubular falling film evaporators pose a difficulty for cleaning the evaporation surface. This is especially difficult in type (1) evaporators described above. Here, it is notoriously difficult to remove remains of the desalination process, e.g. caked salt, from the inner surface of the sometimes 20-meter long tubes. Also for type (2) and (3) evaporators, the cleaning of the evaporation surface may pose problems. In order to have a large evaporation surface area, it is advisable to use small-diameter tubes. However, the outer mantle surface of small-diameter tubes is not always easy to clean due to its curvature. Therefore, in type (2) and (3) evaporators - and also in type (1) - the properties of a large evaporation surface area and an easily cleanable evaporation surface are in conflict.

US patent 5,575,889 discloses an indirect heat exchange falling film evaporator. It has a fixed housing for containing a pool of liquid to be evaporated and an enclosed space above the liquid for vapor boiled off. There is a liquid inlet, an outlet for liquid concentrated by evaporation, and an outlet for boiled off vapor. A number of heating elements within the housing may be rotated about a horizontal axis. Each element has an outer surface for contacting the liquid to be evaporated and an internal passage for a heating medium. The medium inlets open into a chamber within a wall to prevent the liquid to be evaporated from entering the internal passages and the outlets open into another chamber. Means are provided for rotating the elements and chambers with respect to the housing to successively submerge and withdraw the elements so that liquid is carried from the pool on the outer surfaces and falls down as a film under the influence of gravity. Also disclosed are three methods for evaporating a liquid by indirect heat exchange falling film evaporation. Mechanical vapor recompression may be applied. The vaporization surface may have the shape of tubes or of planar surfaces mounted like the blades of a water wheel with respect to the axis which can be rotated.

German patent application DE 40 36 345 discloses an evaporator plant in which fluid is concentrated, which includes a chamber in touch via a heat exchanger with a heat source, and in which vapor rises to leave a concentrate before being compressed and whereby heat is then recovered. The vapors leave through apertures whose cross-sectional area is directly proportional to the level of concentrate in the collection pan and to the pressure loss. Cross-sectional area varies with concentrate level, directly proportional to the effective temperature difference between the heating chamber and the vapor chamber, and the vapor chamber in the heat exchanger. Mass flow of vapor is directly perpendicular to the level of concentrate. During the start-up phase, the cold air in the evaporator is compressed and transferred via a bypass and is then exchanged between the heating chamber and vapor chamber until the working temperature has been reached. Mechanical vapor recompression can be applied.

The present invention aspires to provide a device with an easily cleanable evaporation surface and thereto comprises essentially planar heat exchange surfaces. The present invention aspires to provide for a device with improved scalability purposes and an improved heat exchange surface as compared to prior art devices, while still providing for an even liquid distribution over the evaporation surface. Also, the present invention aspires on an improved heat distribution across the heat exchange surface. The present invention further aspires to reduce the dimensions of the device, and the height of the device in particular, as compared to the prior art, while keeping the same rate or even improving on the rate of treated liquid.

## SUMMARY OF THE INVENTION

The present invention provides a liquid treatment device and method based on MVR which improves on prior art MVR devices and methods. The device is easier to clean and thus easier to keep in good working condition, the device and method provide improved scalability properties and an improved heat exchange between the heated vapor-containing volume and the recompressed heating vapor-containing volume. An even distribution of the liquid over the evaporation surface may also be provided, as well as an improved distribution of the heat medium across the heat exchange surface. Partly due to the excellent scalability properties and partly due to the improved heat exchange of the present invention, the dimensions of the device may be smaller than the dimensions of prior art devices for the same rate of treated liquid, especially at high rates.

The present invention thereto provides an indirect heat exchange evaporator device for liquid treatment by mechanical vapor recompression, comprising

- a fixed fluid-tight evaporator housing for containing liquid to be evaporated and vapor obtained by evaporating said liquid;
- an inlet for feeding liquid to be evaporated into the housing and an outlet from the housing for liquid concentrated by evaporation;

- an outlet from the housing for discharging from said housing vapor boiled off from the liquid by evaporation;
- a plurality of heating elements within the housing mounted on a common horizontal axis, each of said heating elements having an outer surface for contact with said liquid to be evaporated within the housing and having an internal passage for heating medium and an element inlet and an element outlet for the heating medium, said element heating medium inlets opening on to a heating medium inlet channel defined within a wall for preventing liquid to be evaporated from entering the internal passages and said element heating medium outlets opening on to a heating medium outlet channel defined within a wall for preventing liquid to be evaporated from entering the internal passages;

whereby said heating elements comprise an essentially hollow disc-like shape defining a heating element axis and a heating element plane substantially perpendicular thereto, said heating elements comprising a first essentially cylindrical evaporation surface and a second essentially cylindrical evaporation surface surrounding said internal passage, said evaporation surfaces substantially located along said heating element plane, whereby each of said heating elements is mounted along its heating element axis on said common horizontal axis within said housing.

A problem with prior art heat exchange elements comprising axially oriented tubes or planar evaporation surfaces in an axial-radial orientation as e.g. described in US patent 5,575,889, is that the distribution of the heating medium, which in many cases is compressed steam, in the internal passages of the heating elements is not optimal for a high evaporation rate and a high production rate of treated liquid. Indeed, it may be observed that the heating elements of US 5,575,889 are oriented within the housing such that heat medium which enters the heating elements near one end of the housing, the heat medium inlet end, will have cooled down and/or condensated by the time it reaches the outlet at the other end of the housing, the heat medium outlet end. This leads to a sub-optimal use of the total evaporation surface as parts near the inlet end will be heated to higher temperatures than parts near the outlet end, whereas an optimal ratio the production rate of treated liquid to energy consumption of the device is reached for an essentially equal evaporation rate per unit of evaporation surface, which may reached when the evaporation surface is essentially at the same temperature. Such an equal evaporation rate per unit of evaporation surface is further beneficial for the maintenance of the heat elements, as each part of the evaporation surface is equally burdened and solid remains which may stick to the surface are better spread. The present invention solves these problems by providing heating elements which are oriented according to claim 1, i.e. the heating elements have planar evaporation surfaces which are mounted in an essentially radial-tangential orientation. Heating medium flows towards into the internal passages of each heating element separately, i.e. without too much heat losses before the heating medium enters a heating element.

A further problem with radially extending planar evaporation surfaces is the scalability of the device. If a higher production rate is desired, a larger device may be built. In the case of radially extending planar evaporation surfaces, the evaporation surface basically grows linearly with the length and linearly with the diameter of the housing. However, the improved device of the present invention comprises an evaporation surface which grows linear with the length, because more heating elements may be mounted on the common axis, and quadratically with the diameter of the housing, i.e. the available evaporation surface basically grows proportional to the volume of housing.

The present invention also provides an indirect heat exchange evaporator method for liquid treatment by MVR, comprising the steps of:

- providing in a fixed evaporator housing, a liquid to be evaporated;
- introducing heating medium through interior spaces within a plurality of heating elements mounted about a common horizontal axis in said housing while preventing liquid to be evaporated from entering said interior space;
- collecting vapor generated by evaporation in said housing and discharging collected vapor from said housing;

whereby said heating elements comprise an essentially hollow disc-like shape defining a heating element axis and a heating element plane substantially perpendicular thereto, said heating elements comprising a first essentially cylindrical evaporation surface and a second essentially cylindrical evaporation surface surrounding said internal passage, said evaporation surfaces substantially located along said heating element plane, whereby each of said heating elements is mounted along its heating element axis on said common horizontal axis within said housing.

One advantage of the method and/or device of the present invention is an improved ratio of the amount of treated liquid compared to the amount of liquid to be treated as compared to prior art devices and/or methods. This is due to a very efficient and substantially equally distributed heat exchange through the evaporation surfaces. This improved ratio also results in a higher concentration of impurities in the concentrated liquid which leaves the housing. In case of the liquid being salt water, this concentrated liquid can then be more efficiently used for osmotic power generation, as described further in this document. A further advantage is the possible application of the present invention for the evaporation of waste water, whereby the present invention offers the possibility of recuperating process water and of zero-waste discharge applications, the latter being a very important problem in all types of industries.

The present invention also provides a system for water desalination by MVR, comprising:

- an indirect heat exchange evaporator device comprising a housing with heating elements for evaporating salt water, capable of producing desalinated water at a heating medium outlet channel and brine at a housing outlet;
- an osmotic power generator connected to said housing outlet of said indirect heat exchange evaporator, capable of producing power from the energy available in the difference of salt concentration between said salt water and said brine.

Preferably, said indirect heat exchange evaporator system is an indirect heat exchange evaporator device as described in this document. In particular, said heating elements of said indirect heat exchange evaporator system may comprise an essentially hollow disc-like shape defining a heating element axis and a heating element plane substantially perpendicular thereto, said heating elements comprising a first essentially cylindrical evaporation surface and a second essentially cylindrical evaporation surface surrounding said internal passage, said evaporation surfaces substantially located along said heating element plane, whereby each of said heating elements is mounted along its heating element axis on a common horizontal axis within said housing.

The present invention further provides a method for water desalination by MVR, comprising the steps of:

- providing salt water to an indirect heat exchange evaporation system comprising a housing with heating elements for evaporating salt water, a heating medium outlet channel and a housing outlet;
- producing desalinated water at said heating medium outlet channel and producing brine at said housing outlet;
- generate power by osmotic power generation using the difference in salt concentration between said brine and said salt water.

Preferably, the step of producing desalinated water at said heating medium outlet channel and producing brine at said housing outlet is performed using an indirect heat exchange evaporator device and/or method for liquid treatment by MVR as described in this document. In particular, said water desalination method may comprise the step of introducing heating medium through interior spaces within a plurality of heating elements mounted about a common horizontal axis in said housing while preventing liquid to be evaporated from entering said interior space, whereby said heating elements comprise an essentially hollow disc-like shape defining a heating element axis and a heating element plane substantially perpendicular thereto, said heating elements comprising a first essentially cylindrical evaporation surface and a second essentially cylindrical evaporation surface surrounding said internal passage, said evaporation surfaces substantially located along said heating element plane, whereby said heating element is mounted on said horizontal axis along said heating element axis.

When a system or method according to the present invention is used, the resulting brine comprises a higher salt concentration, which makes it particularly suitable to be combined with an osmotic generation means. This is due to an improved ratio of the amount of treated liquid compared to the amount of liquid to be treated as compared to prior art devices and/or methods.

## DESCRIPTION OF FIGURES

**Figure 1** shows a falling film evaporator (FFE) with tubes and evaporation inside the tubes.
**Figure 2** shows the principle of the MVR-FFE method.
**Figure 3** shows a rudimentary illustration of the MVR-RHDE concept.
**Figure 4** shows an MVR T-s diagram cycle.
**Figure 5** shows a H-s diagram example of a 3-evaporator serial set-up (3→4, 4→5, 5→1).
**Figure 6** illustrates the schematics and evaporation model parameters according to an embodiment of the present invention.
**Figure 7** shows the temperature distribution within the set-up of Figure 6.
**Figure 8** shows a hollow disk dryer for granular (food) products.
**Figure 9** shows a Seawater Desalination Unit (SWDU) described in US 2008/230376 which shows a SWDU possibly based on reverse osmosis but also possibly on thermal desalination methods.
**Figure 10** shows an example of an embodiment of a rotatably mounted heating element comprising the shape of a hollow disk, and in particular the inlets/outlets and the flow of the heating medium.

## DETAILED DESCRIPTION OF THE INVENTION

The present invention concerns a device and a method for liquid treatment by mechanical vapor recompression, as well as a device and method specifically suited for water desalination by MVR.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:

"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise," "comprising," and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "% by weight" (weight percent), here and throughout the description unless otherwise defined, refers to the relative weight of the respective component based on the overall weight of the formulation.

The terms "radial", "axial" and "tangential" as used throughout this text, refer to orientations with respect to an axis. "Axial" in this context refers to the orientation parallel to the axis, "radial" refers to the orientation straight away from or towards the axis and thereby perpendicular to the axis, "tangential" refers to the orientation perpendicular to the axial and radial orientation and in the orientation following a circle around the axis.

In the literature the abbreviations MVR and MVC can be found, indicating the same principle :

- MVR : mechanical vapor recompression
- MVC : mechanical vapor compression

In this text only the abbreviation MVR will be used. Information on the principles and industrial use of MVR based evaporation can be found in e.g.:

a. E. Brauns, "Naar herwinning van proceswater via verdamping", Het Ingenieursblad, nr. 11-12, november 2004
b. http://www.gea-wiegand.com/geawiegand/cmsdoc.nsf/webdoc/ndkw745amv
c. H.T. El-Dessouky, H.H. Ettouney, Fundamentals of Salt Water Desalination, Elsevier, 2002

Evidently, a large number of publications on MVR can be found in the scientific literature. MVR is the ultimate energy efficient process since the latent heat of evaporation is recaptured completely during the condensation of the water vapor. The principle is discussed briefly hereafter, on the basis of the use of a typical falling film evaporator, as used in industry (see e.g. ref b. p 19-21).

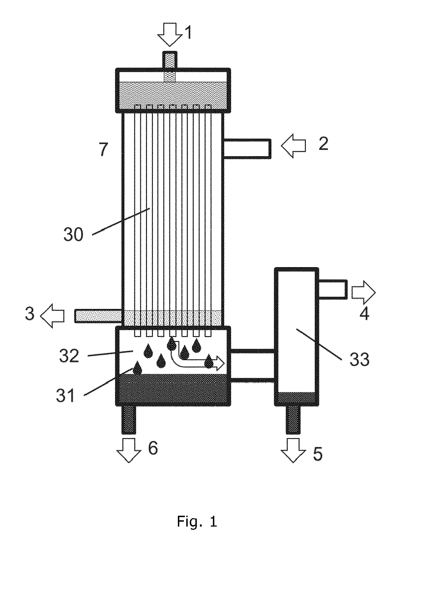

In figure 1 the falling film evaporator (abbreviated FFE in this text) is shown (without the mechanical vapor compressor being installed). The tubes can be typically 10-20 m in length. In the upper part of the FFE the process stream to be evaporated is fed to the compact bundle of long parallel tubes. The feed flow (1) is controlled in such a way that a thin film of feed is created on the inner surface of the tubes (30). The tubes are thus not filled with fluid. There is only a thin film flowing downwards by gravity along the inner surface of the tubes. As a result, the water in the thin film can evaporate inside the tubes. Evidently sufficient heat needs to be applied to sustain the evaporation. The amount of heat needed corresponds to the latent heat of evaporation (abbreviated LHE in this text) of water. Since the transfer of water molecules from the liquid phase to the vapor phase needs the breaking of the important dipole-dipole Vanderwaals bonding between the water molecules, a large amount of heat is needed to induce this intermolecular bond breaking : the LHE of water is about 2500 kJ/kg (= 694 kWh/$m^3$). The LHE is thus very high ; e.g. it can be compared with the specific heat of water which is only 4.2 kJ/kg.°C (= 1.17 kWh/$m^3$.°C).

As a result, it is necessary to apply at the outside surface area of the tubes (30) sufficient heat, e.g. in the form of steam (2) which can be blown into the evaporator (7) comprising the tubes (30), in order to sustain the evaporation of the water, out of the thin film which is falling downwards at the inside surface of the tubes. A FFE of course could also be operated without MVR but in such case all LHE needs to be applied at the outside surface area and will then be lost in the vapor (when not condensing the water vapor). When cooling the water vapor in an external heat exchanger (condenser) evidently all LHE linked energy will be lost in the cooling medium, within the heat exchanger. An evaporation process as such, while not recuperating the LHE, is economically unfeasible in industry. The MVR based evaporation principle then allows to recuperate that LHE to a very high level (even to a level of an energy consumption during evaporation of only 1 % of the LHE), as explained further in this text.

At the base of the tubes, the falling film consists of a partially evaporated process stream whereby the concentrate (31) is collected in a collector vessel at a water pressure P (32). The concentrated stream (6) is thus collected, below the bundle of tubes, in the bottom collector vessel of the FFE. The water vapor is first fed through a droplet separator (33) in order to remove droplets of concentrate (5) which may have originated from the "boiling" (the FFE is at a low pressure) of the feed (1) inside the falling film tubes. The droplets are added to the concentrate at the bottom of the FFE where after the concentrate is transported for further treatment (eventually a succeeding falling film evaporation treatment).

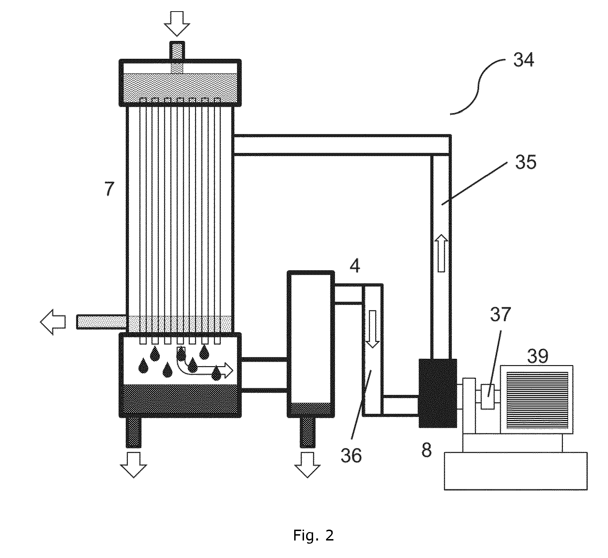

It is now clear that the venting of the water vapor (4) e.g. into the open air would cause the massive loss of valuable energy (LHE). As a result, at some time in the history of industrial development, the brilliant concept was suggested of MVR which is based on the open heat pump principle (34) as illustrated in figure 2. The water vapor (4) is thus collected by a compressor (8), e.g. the vapor (4) is sucked (36) into the turbine of a compressor (8), and compressed in order to increase somewhat its temperature. The compression process can be studied while e.g. using a Mollier H-s diagram. The compressor may be driven by a motor (39) via e.g. an axle (37). Hereby, the motor (39) can be driven by e.g. electrical power, steam, gas, gasoline, a steam cabin powered by solar energy, it can be a combustion engine, etc. The compressed water vapor is then recycled (35) to the outside surface area of the tubes of an evaporator (7) in the bundle as to initiate at the surface a condensation and thus recuperation of the latent heat of evaporation as heat of condensation, i.e. the compressed water vapor from (4) which comprises latent heat of evaporation is used to heat up the tubes (7). Since the water vapor condenses as pure water it is evident to also collect that condensate (3) and reuse it as pure process water (e.g. in a factory). The action of a MVR could be compared with a heat pump which is using water vapor as the heat transport medium. The result of MVR is a very energy efficient evaporation process at a level of 1-1.5 % of the LHE (with eventual room for some further improvement). An energy consumption of about 1.5 % of the LHE corresponds to about 36 kJ/kg = 10 kWh/$m^3$ of condensate (=evaporated water).

Some references to substantiate such value from practice :

- N. Lukic, Economical aspects of the improvement of a mechanical vapor compression desalination plant, Desalination 264 (2010) 173-178:

  "In MVC plants, the range of the specific energy consumption is most likely 7-12 kWh/$m^3$. There is a chance for scientists to achieve optimal thermal desalination scenarios and lower water unit production costs."

- J. Veza, Mechanical vapor compression desalination plants - A case study , Desalination Volume 101, Issue 1, March 1995:

  "Desalination plant consists of two low-temperature vapor compression units, with a production capacity of 500 $m^3$/d each. These units were commissioned in 1987 and 1989 and have been producing water with high levels of availability. Product water is consistently below 20 $\mu$S/cm conductivity. Energy consumption ranges from 10.4-11.2 kWh/$m^3$."

In a first aspect, the invention provides an indirect heat exchange evaporator device for liquid treatment by mechanical vapor recompression as specified in claim 1.

Preferably at least one evaporation surface comprises a removable covering foil for easy maintenance. The foil may comprise a textile, such as a woven, a non-woven or a combination thereof. Maintenance which may be necessary due to solid remains sticking to the evaporation surface, e.g. caked salt, becomes easy as it may be performed by removing the foil. The foil may be replaced by a new foil or may be cleaned more easily than the solid evaporation surface and subsequently re-used.

Preferably said inlet comprises a manifold with a supply system connected thereto for supplying the manifold with liquid to be evaporated, said manifold comprising a plurality of manifold openings in fluid connection with said evaporator housing, said manifold located above said heating elements and preferably at least one of said manifold openings being located directly above one or more heating elements for guiding liquid to be evaporated over the evaporation surfaces of said heating elements. The manifold helps to distribute the liquid to be evaporated over the evaporation surfaces.

Preferably said device comprises means for rotating the heating elements and channels together with respect to the housing to successively submerge the heating elements in liquid and withdraw the heating elements from the liquid on the outer surfaces of the elements so that liquid is carried on the outer surfaces of the elements and falls down said outer surfaces of the elements as a film under the influence of gravity. A problem with heating elements with axially-radially oriented evaporation surfaces, is the resistance one experiences against rotation of the heating elements when these are at least partially submerged in a pool of liquid which is formed at the bottom of the housing. Such resistance is much less with heating elements as specified in the present invention, leading to less energy consumption of the device.

In a preferred embodiment, said inlet channel and/or said outlet channel are located coaxially along said common horizontal axis, in particular when the heating elements are rotated in the housing during operation. In this case, the inlet and outlet channels which rotate together with the axis, are more easily connected to the non-rotating parts of the device, preferably the inlet and/or outlet channels are in fluid connection with heating medium supply means and/or condensate extraction means respectively at longitudinal ends of the axis.

Preferably said device comprises an osmotic power generating system in connection with said outlet from the housing for liquid concentrated by evaporation for generating power. The concentrate which comes out of the outlet from the housing can be used for osmotic power generation, since a concentration difference exists between the concentrate and the liquid in the original concentration.

In a second aspect, the present invention provides for an indirect heat exchange evaporator method according to claim 7.

Preferably said liquid to be evaporated is provided via openings being located directly above one or more heating elements, thereby guiding liquid to be evaporated over the evaporation surfaces of said heating elements.

Preferably, said liquid to be evaporated is provided via an inlet in said housing which comprises a manifold with a supply system connected, said manifold comprising a plurality of manifold openings in fluid connection with said evaporator housing, said manifold located above said heating elements and preferably at least one of said manifold openings being located directly above one or more heating elements for guiding liquid to be evaporated over the evaporation surfaces of said heating elements.

Preferably, liquid is provided such that a pool of liquid is formed in said housing, whereby at least part of a heating element is submerged in said pool. This is particularly suitable for when the heating elements are being rotated.

Therefore, in a preferred embodiment, said heating elements are mounted for rotation about said common horizontal axis, and said method comprises the steps of:

- rotating the heating elements with respect to said housing about the common axis of rotation to successively submerge the heating elements in the liquid and to withdraw the heating elements from the liquid so that liquid flows down over outer surfaces of the heating elements as a film under the influence of gravity.

Preferably, said vapor generated by evaporator is collected in an upper portion of said housing.

In a further aspect, the present invention provides a system and method for water desalination by mechanical vapor recompression according to claims 12 and 13 respectively.

Preferably, the osmotic power generator comprises a power outlet which is connected directly or indirectly to a power inlet of the evaporator device for reducing the net energy consumption of the total system. In a more preferred embodiment, the system also comprises wind and/or solar energy extraction means such as a windmill, solar cells or direct steam generation (DSG), in order to provide at least partially for the power needed to drive the MVR turbine of the evaporator device. Thereto, the method comprises the step of using power generated by osmotic power generation for driving a heat exchange evaporator device or for performing a heat exchange evaporator method, whereby preferably a deficit on power may be provided at least partially by solar and/or wind energy.

The present invention also pertains the use of an indirect heat exchange evaporator system and/or method according to the present document in a system for storing wind and/or solar energy in a concentrate produced by said indirect heat exchange evaporator system or method.

In yet a further aspect, the present invention provides a method for storing wind and/or solar energy, comprising the steps of:

- producing brine from salt water using indirect heat exchange evaporation, preferably using an indirect heat exchange evaporator method and/or a system as disclosed in this document;
- storing said brine as an energy source for producing energy by osmotic power generation;

whereby said indirect heat exchange evaporation is driven at least partly, and preferably completely, by wind and/or solar energy.

The present invention also provides a system for storing wind and/or solar energy, comprising:

- an indirect heat exchange evaporator system, preferably as disclosed in this document;
- wind and/or solar energy extraction means such as a windmill, solar cells or direct steam generation (DSG),

whereby wind and/or solar energy extraction means are capable of producing power from wind and/or solar energy and are connected to said indirect heat exchange evaporator system in order to provide said indirect heat exchange evaporator system with power, thereby effectively storing wind and/or solar energy in a concentrate produced by said indirect heat exchange evaporator system.

EXAMPLES

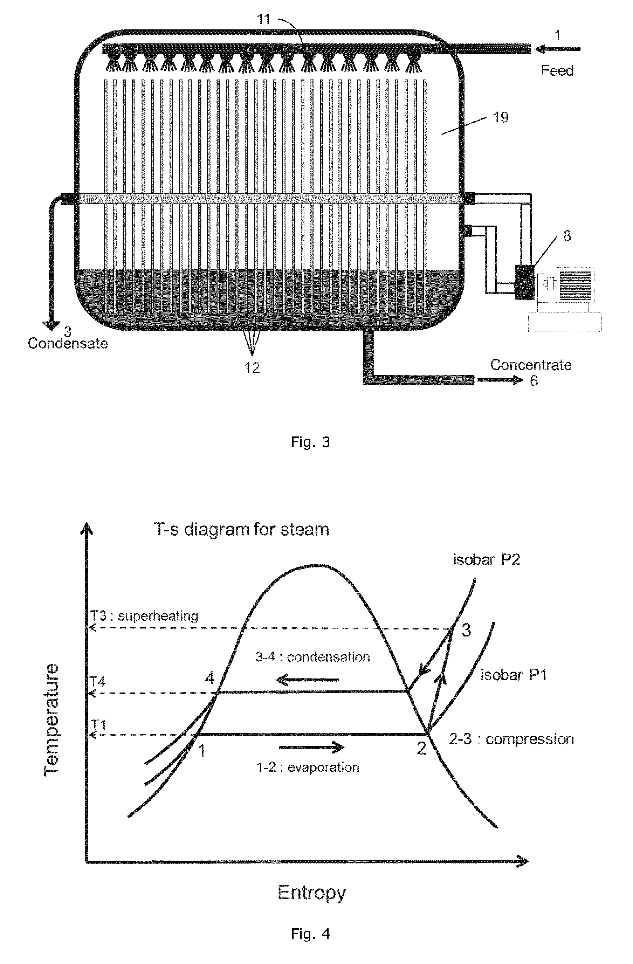

In the following, a rotating hollow disk based evaporator concept will be abbreviated as RHDE. The RHDE idea is rudimentary illustrated in Figure 3. Hollow disks (12) are mounted (welded) in series on a rotary motion based hollow shaft. Each hollow disk needs to be considered as one heating element, or evaporation unit, equivalent to each of the other neighboring hollow disks. A hollow disk may be basically produced by welding together two stainless metal circular plates. Eventually one hollow disk is assembled out of multiple individual segments which, when mounted, produce the equivalent of one hollow disk. The outer surface area of the hollow disks is used to evaporate process water while the inner surface is used for the condensation of the compressed water vapor. Therefore, during the condensation heat is transferred through the hollow disk walls to the outside surface area in order to sustain the evaporation at that outside surface. In this way the LHE is indeed recuperated as heat of condensation in order to obtain a very efficient evaporation.

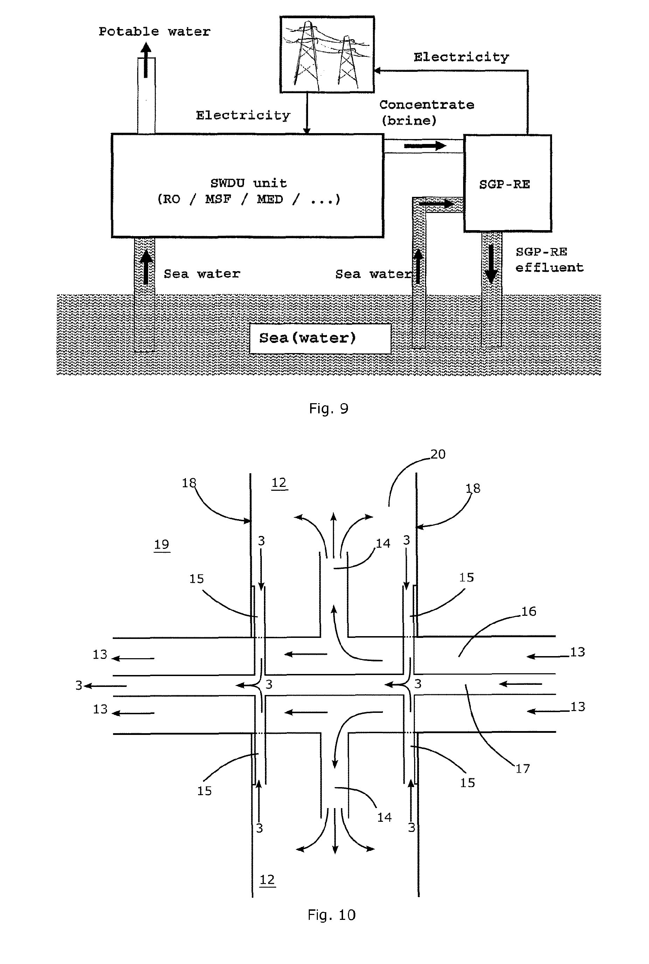

The hollow disks are rigidly mounted on the central hollow shaft in such a way that the inside space of each hollow disk (segment) is connected to the central main shaft, as to receive the compressed water vapor and allow the condensation of that compressed vapor at the full inside surface area of the hollow disk. The condensate then will move by gravitation downward in the hollow disks. In order to be able to remove the condensate and to avoid filling up half of the volume of a (stationary) hollow disk with condensate it is evidently necessary to introduce a rotary motion of the hollow disks in combination with partitions. (It should be noted that if the hollow disks are mounted stationary, the condensate may be extracted via an outlet at the bottom of the disk.) The partitions also rotate since the partitions are bodily connected to the hollow disk structure. The partitions thus will enforce the falling condensate to flow in the direction of the central shaft when being positioned, from the rotation of the assembly, in the upper half of the construction at that time. It is thus technically feasible to have a second, in diameter smaller, hollow shaft B (not shown in Figure 3) e.g. inside the main, in diameter larger, hollow shaft A. The shaft B is concentric with respect to shaft A. When having a connection (e.g. short tubing) to shaft B near the central end location of the partitions it is clear that the condensate collected by the partitions will be directed to and through such interconnecting tubing. In this way the condensate can be transported out of the hollow disks, through shaft B. This is illustrated further in this text and in fig. 10.

The system operates in a feed & bleed mode. The feed influent could be provided in the upper half zone of the hollow disks by spraying the feed (1), e.g. with the aid of a manifold (11), on the outer surface of the hollow disks (12) to induce the evaporation of the feed. At the bottom of the installation (part of the lower half zone of the hollow disks) a specific volume of concentrate can also be present, to moist the outer surface of the rotating hollow disks. It could be remarked that the moistening rate at the bottom of the installation can also be additionally controlled through the rate of rotation of the hollow disks.

Regarding the concept of a typical FFE, as illustrated in Figure 1, some aspects can be indicated which could be more unfavourable for the FFE method and more favourable for the RHDE method, when combined with MVR. The MVR based RHDE will be further indicated by MVR-RHDE. The aspects of geometry, fouling, evaporation improvement and evaporation (rate) control are discussed in more detail here under.

Geometry:

- MVR-FFE: Classic FFE is vertical since it uses gravity (bundle of parallel vertical tubes) and requires a high build of the installation to assure a sufficiently long evaporation path length and sufficiently large inner tube surface area to guarantee the evaporation rate of the process stream (falling film). A large number of parallel tubes are required.
- MVR-RHDE: The evaporation surface area of RHDE requires less vertical space. The build is based on a horizontal space principle since the wetting of the outer disk surface of the rotating hollow evaporation disks is feasible from either the process water at the bottom of the RHDE housing (19) or by spraying the feed water at the top or a side location of the disks, e.g. via a manifold (11).

Fouling:

- MVR-FFE: The internal cleaning of fouled tubes is difficult. Flow instabilities may cause dry spots where solid deposits are generated which can grow in size. When the removal of such deposits is needed, the cleaning of the inside of each of the contaminated tubes requires the shutdown of the installation, the opening of the installation and individual mechanical cleaning. This involves time consuming manual cleaning actions, thus expensive labor work.
- MVR-RHDE: The outside surface area of the rotating hollow disks is obviously much more accessible

- when using an additional textile lining on the RHDE disks outer surface, the lining can prevent a direct fouling (solids deposits) on the outer metal surface and thus protect that surface regarding fouling. An easy to remove/replace textile lining thus would allow for a much better fouling control of the evaporator. A change of the cloths by new ones would demand the opening of the installation. The cloths eventually could be reused after cleaning (outside the installation).
- when using an automatic (high) pressure nozzle spray system inside in the RHDE, the outer surface of the rotating disk could be cleaned automatically/regularly during the rotation of the disks without opening or really shutting down the installation. Between each of the disks one cleaning arm (including cleaning spray nozzles) could be mounted on a common (high) pressure water supply (tube) which can rotate back and forth(less than 90° needed) to cover the full outer surface area of the rotating hollow disks.
- eventually, the cleaning of the textile lining on the outer surface of the hollow disks could be done in place without opening the installation. A CIP (cleaning in place) procedure could be feasible while using special cleaning agents to remove foulants (scalants). The evaporation needs to be interrupted during the CIP treatment.

Evaporation improvement:

- MVR-FFE: The falling film needs to be homogeneous over the full path from the top to the bottom of the tube bundle. In the case that the thin film is somewhat unstable at some locations of the inner surface of the tubes it is possible that dry zones could emerge, inducing the risk of dry solids deposition in those locations and thus unwanted fouling. Such fouling deposits hamper the functioning of the thin film evaporation process and cleaning is needed in such cases in order to restore the quality of the inner surface of the evaporator tubes.
- MVR-RHDE: The use of a textile lining should improve the homogeneous distribution of the liquid over the evaporator disks outer surface area (through capillary effects within the woven structure of the textile). This should largely or completely reduce the risk of specific instability locations (thus dry zones) as in the case of a falling film evaporator, using a bundle of tubes (with internal evaporation). The spraying of feed in the upper half zone of the rotating disks and the submerging of part of the lower half zone of the rotating disks in should emphasize the homogeneous distribution of the feed over the evaporation surface area and within the textile lining.

Evaporation (rate) control:

- MVR-FFE: The falling film flow rate is mainly conditioned and controlled through gravity. The degree of freedom regarding the selection of flow values and flow control is restricted.
- MVR-RHDE: Since the speed of rotation of the hollow disks is controllable, as well as the rate of vapor extraction and compression by the compressor it is expected that the MVR-RHDE installation is more flexible in evaporation rate control when compared to the FFE concept.

<u>Simulation of MVR-RHDE</u>

As to the build of the evaporator, a typical thickness of a hollow disk would be 1 cm. The centre to centre inter distance between two hollow disk would be typical a few cm. A smaller disk centre-to-centre inter distance design will induce a more compact installation. The diameter of a hollow disk is expected to be a few metres. In the applications examples, through simulation, therefore some assumed values of disk thickness diameter and inter distance will be used. In the next paragraphs three examples (through simulation calculations) will be presented to show the feasibility/applicability of the MVR-RHDE concept.

Example I: Treatment of typical industrial water with 1 wt% total dry solids.
Example II: Evaporation of seawater reverse osmosis (SWRO) concentrate to extract additional potable water and to produce a concentrate at a high concentration to be used in a salinity gradient power by reverse electrodialysis (SGP-RE) installation to generate electricity.
Example III: Evaporation of seawater or brackish water to produce potable water.

<u>Simulation example I of the MVR-RHDE treatment of a typical waste water</u>

A typical industrial waste water at a concentration of 10 g/L (1 wt% of total dry solids = 1 wt% TDS) is available to be treated by MVR-RHDE. Feed candidates could be specific classes of waste water, from industrial or municipal (bioreactor) waste treatment plants. Especially the effluent of membrane bioreactor based waste water treatment facilities would be good candidates for a MVR-RHDE treatment. It is assumed in this first Example I that the salt content in the TDS is low as to have a low osmotic contribution (see Examples II and III for salt containing feeds). The waste water is converted through MVR-RHDE in a large fraction of condensate (pure water) that can be recycled as process water in the company producing the waste water. Is it shown in

E. Brauns, "Naar herwinning van proceswater via verdamping", Het Ingenieursblad, nr. 11-12, november 2004, that a concentrate concentration can be obtained of 150 g/L (thus 15 wt%). Therefore the volume of waste water is reduced with a factor 15 (!). A volume of 1 $m^3$ of waste water thus is separated into 933.7 L of condensate (pure water) and 66.7 L of concentrate. In Example I a very large amount of clean process water is thus obtained out of the waste water at a recovery of nearly 95 %.

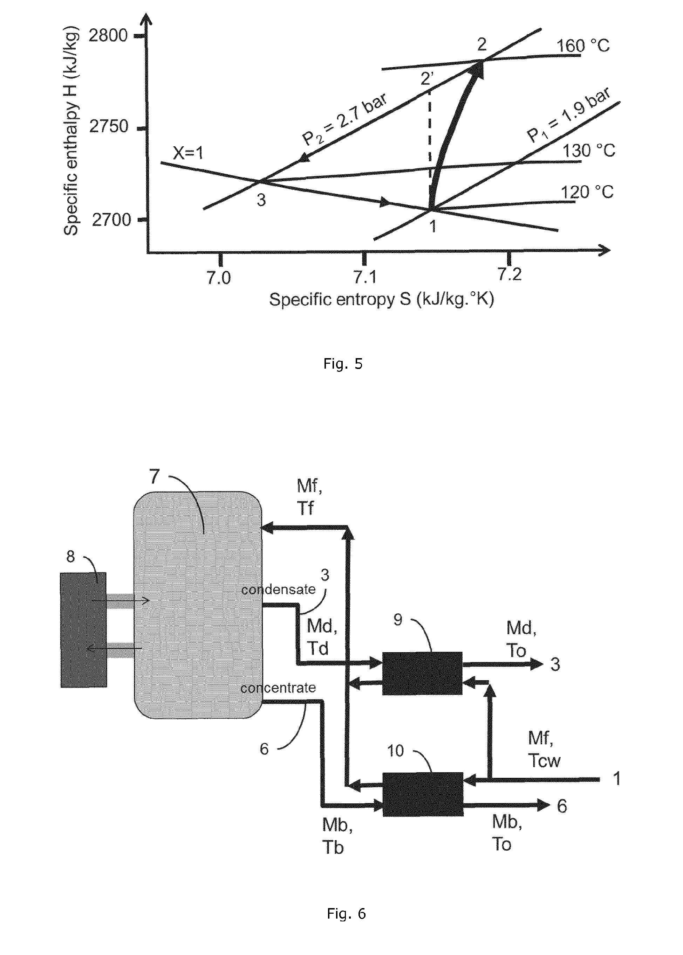

The principle of MVR based evaporation is illustrated in Figure 4 while using a T-s (temperature-entropy diagram). While using a Mollier H-s (enthalpy-entropy) diagram as in Fig. 5, the energy consumption of the compressor can be determined directly. In a Mollier H-s diagram the line x=1 marks off the bell shaped domain of "wet steam" (domain where steam and water droplets co-exist). The line labeled by the ratio "x" expresses the ratio of dry steam and water droplets. At x=1 no water droplets are present and the stream is thus completely dry. At x<1 the x-fraction expresses the ratio of dry steam versus amount of water droplets. Steam is thus wet for x<1.

Figure 5 shows an example (by GEA-Wiegand) of the principle of the use of the Mollier H-s diagram. However the temperature difference $\Delta T$, the vapor pressure and compression pressure in the example within Figure 5 are relatively high. Therefore, in Example I a much lower temperature of 60 °C and a corresponding low evaporation pressure (0.2 bar) is assumed (as is indeed used in practice in industry).

The mathematical modeling of MVR based evaporation can be found in e.g.

H.T. El-Dessouky and H.M. Ettouney, Fundamentals of Salt Water Desalination, Elsevier, Amsterdam, 2002, chapter 3.2 p. 81-109.

The scheme as used in the model by H.T. El-Dessouky and H.M. Ettouney is shown in Figure 6. The set-up consists of a compressor (8), a RHDE evaporator (7) (corresponding to the concept of Figure 3) and two Feed Preheaters (heat-exchangers) which exchange heat between concentrate and feed (10) and between condensate and feed (9). The feed arrives at T=Tcw and at a mass flow Mf. The feed is split into two fractions.

A first fraction flows through a concentrate based Feed Preheater (counter-current mode heat exchanger) which extracts the remaining heat from the warm concentrate. The concentrate enters the Feed Preheater at a temperature of T=Tb and at a mass flow Mb.

A second fraction flows through a condensate based Feed Preheater (counter-current mode heat exchanger) which extracts the remaining heat from the warm condensate. The condensate enters the Feed Preheater at a temperature of T=Td and at a mass flow Md.

The compressor increases the pressure of the water vapor being produced from the evaporation of the feed on the outer surface of the rotating hollow disks. The increased pressure causes the temperature of the water vapor to increase also. The compressed water vapor is forced into the internal space of the hollow evaporation disks to induce its condensation and transfer of the heat of condensation towards the feed on the outer surface of the rotating hollow disks.

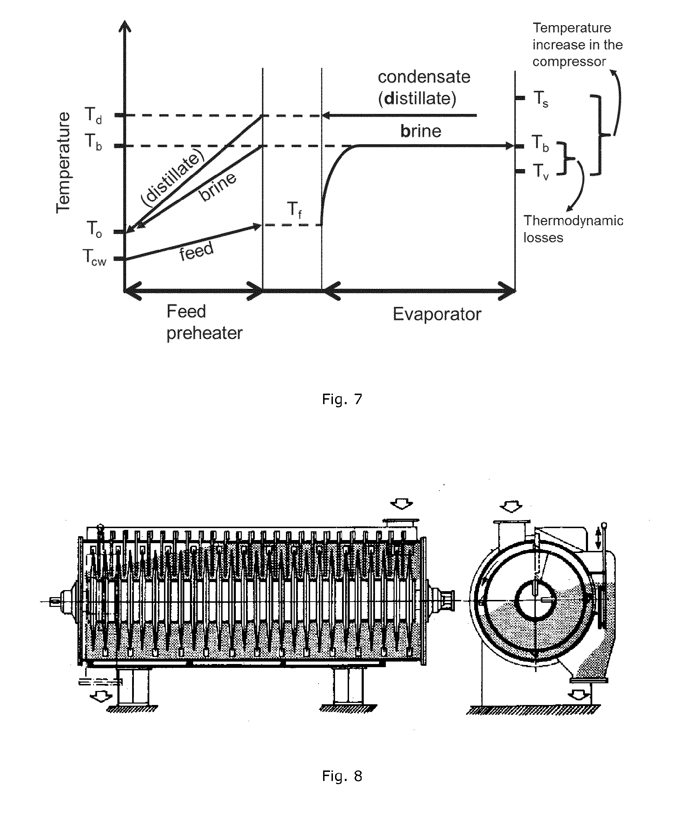

Figure 7 illustrates the temperature distribution in the set-up as shown in Figure 6. In example I the following input parameter values are assumed to estimate, through a mathematical model simulation, the key installation parameter values. To have a reference, the condensate mass flow Md=1 kg/sec (Md= 3.6 $m^3$/h) is assumed. For higher Md values the compressor power consumption and the size of the installation evidently is proportional to Md and thus can be recalculated from the values mentioned below. The diameter of the hollow disks is assumed to be 2 m. The inter centre-to-centre distance between two disks is assumed to be 0.03 m.

At the evaporation location, the temperature Tb=60 °C. The pressure at the compressor entrance is 20000 Pa. A compressor ratio of 1.42 is assumed. The pressure at the output side of the compressor is thus 28400 Pa. When using the Mollier diagram (in an analog way as in Figure 5) the value of Td can be obtained: Td=68 °C. When assuming an isentropic compression efficiency of 0.8, the compressor power consumption can be calculated from the enthalpy differences (extracted from the Mollier diagram): Pcompr = 75 kW. This corresponds, on the condensate basis, to about 20 kWh/$m^3$ of condensate. It can be remarked that this value of 20 kWh/$m^3$ corresponds to the industrial case mentioned in

E. Brauns, "Naar herwinning van proceswater via verdamping", Het Ingenieursblad, nr. 11-12, november 2004.

There, a condensate flow of 30 $m^3$/h requires 625 kW which corresponds to about 20 kWh/$m^3$. Reference is made here also to both examples given before (see Lukic and Veza) where lower values in practice of even 10 kWh/$m^3$ are reported. This is also linked to the temperature difference $\Delta T$=Tb-Td. A lower $\Delta T$ allows for less power consumption (see Figure 5) but increases the size of the installation. It can be stated, in an approximate way, that increasing $\Delta T$ by a factor 2 decreases the installation size (total evaporation surface area) by a factor of 2 but increases the compressor power consumption with a factor 2. It is thus clear that each application should be (economically) optimized regarding the design and AT.

Since the dry solids concentration of the concentrate is 0.15 kg/kg, the feed flow Mf=1.07143 kg/sec and the concentrate flow Mb=0.07143 kg/sec.

The evaporation and heat exchange parameters within the set-up as presented in Figure 6 can be estimated from the model as developed by El-Dessouky. An overall evaporation heat transfer coefficient Ue=2400 J/s.m$^2$.°C is assumed. With respect to both Feed Preheaters (heat exchangers) an overall condensate heat transfer coefficient Ud=1800 J/s.m$^2$.°C and overall concentrate heat transfer coefficient Ub=1500 J/s.m$^2$.°C are assumed. When having Tcw=25 °C the model simulation results in:

- To=37.3 °C
- condensate heat exchanger surface area Ad = 5.687 m$^2$
- concentrate heat exchanger surface area Ab = 0.5657 m$^2$
- number of hollow disks : about 20 (model value : 19.73)
- total horizontal length of the series of 20 disks : about 0.6 m

Example I thus shows the basic feasibility of the MVR-RHDE concept when processing waste water into a major volume of condensate (reusable as process water) and a small volume of concentrate. It is common practice to reduce the concentrate volume even further in a secondary evaporator (e.g. forced loop evaporator). This allows in principle to transport an adequate small volume of concentrate to a specialized waste treatment facility. The reduction of the concentrate volume to a near-dry waste could also be targeted. A company's closed process water loop and zero waste discharge would then be feasible. The MVR-RHDE concept could clearly contribute to such a target.

<u>Simulation example II the MVR-RHDE based processing of SWRO brine</u>

The principle of the production of electrical energy from a salinity gradient (Salinity Gradient Power; SGP) is described in:

- E. Brauns, Towards a worldwide sustainable and simultaneous large scale production of renewable energy and potable water through salinity gradient power by combining reversal electrodialysis and solar power?, Desalination, 219 (2008) 312-323
- E. Brauns, Salinity gradient power by reverse electrodialysis: effect of model parameters on electrical power output, Desalination 237 (2009) 378-391
- E. Brauns, An alternative hybrid concept combining seawater desalination, solar energy and reverse electrodialysis for a sustainable production of sweet water and electrical energy, Desalination and Water Treatment, 13 (2010) 53-62

The suggested approach is based on SGP through Reverse Electrodialysis and the acronym is therefore SGP-RE. A European research project REAPower (www.reapower.eu) targets the development of a SGP-RE battery. The salinity gradient is obtained by using two salt solutions:

- seawater (or brackish water) as the low concentration salt solution; being indicated as LOW
- concentrate (brine) from a seawater desalination plant being based on e.g. SWRO (seawater desalination by reverse osmosis) of which the concentration is increased by using solar energy. The high concentration brine is indicated as HIGH.

Patent application US 2008/0230376 concerns the hybrid SGP-RE system.

The HIGH is thus produced from e.g. SWRO brine. In a typical SWRO plant, 1 m$^3$ potable water is produced out of 2 m$^3$ of seawater through reverse osmosis while thus producing 1 m$^3$ of brine. When assuming a concentration of 35 kg of salt per m$^3$ of seawater and at the assumed recovery of 50 % the brine thus will show a concentration of 70 kg/m$^3$, being the double of the concentration of seawater. As to obtain a large salinity gradient value, the SWRO brine concentration can be increased, e.g. through applying an evaporation process.

In Example II, the same arbitrary case will be used as described on p. 58-60 within:

E. Brauns, An alternative hybrid concept combining seawater desalination, solar energy and reverse electrodialysis for a sustainable production of sweet water and electrical energy, Desalination and Water Treatment, 13 (2010)

A SWRO facility thus produces 500 m$^3$/h of potable water at a recovery of 50 %. There is thus a SWRO brine flow, also at 500 m$^3$/h and at a concentration of 70 kg/m$^3$. A solar based evaporation unit is assumed to increase the brine effluent concentration to about 265 kg/m$^3$, thus obtaining about 370 m$^3$/h of condensate (extra potable water) and about 130 m$^3$/h of concentrated brine (HIGH ; useable in a SGP-RE battery to produce electricity). As a result the total production of potable water has increased from 500 m$^3$/h towards 870 m$^3$/h, thus an increase in potable water of about 75 %. The additional production at 370 m$^3$/h mounts to a yearly additional production of about 3 million of potable water. At an assumed sales price of 1 $ per m$^3$ of potable water, the added economical yearly value would thus be about 3 million $. The economical added value from the additional potable water production is most important, next to the SGP-RE electrical energy production.

The potential relevance of the implementation of a MVR-RHDE based evaporation installation to produce additional potable water from the SWRO brine and in parallel to produce HIGH, to be used in a SGP-RE battery, is thus obvious. In Example II the same procedure as in Example I will be used to estimate through model simulation the key evaporation parameter values of a MVR-RHDE based evaporation installation. Since the principles of the latent heat of evaporation and the latent heat of condensation remain the same, it is indeed possible to estimate in the same way as in Example I the evaporation related key parameter values. However, one important topic needs to be added here in the analysis since the contribution of the osmotic energy needs to be accounted for. In Example I the MVR-RHDE concentrate was assumed to not show a significant concentration of a salt solution in a way that the osmotic energy effect could be neglected. In the case of Example II however, the SWDR brine is converted through evaporation into about 75 % of condensate (potable water) and 25 % of HIGH. It is therefore necessary to calculate the osmotic effect. The osmotic effect can be estimated on the basis of the entropy of mixing, as described in:

Jan Post, Energy Recovery from Controlled Mixing Salt and Fresh Water with a Reverse Electrodialysis System, Environ. Sci. Technol. 2008, 42, 5785-5790

In Example II evidently the analysis regarding the osmotic effect deals here specifically with the osmotic energy which is stored in the HIGH (25 %) after removing water through evaporation in the MVR-RHDE (captured as 75 % condensate) from the SWRO brine (100 %). The mixing approach as applied by Post should be approached here in a reverse way: namely by considering the de-mixing of an SWRO brine into a low concentration salt solution (potable water, condensate; 3 parts) and a highly concentrated salt solution (HIGH; 1 part). The analysis within Example II then should look into the osmotic energy which would become available when mixing 1 part of HIGH with 3 parts of the low concentration salt solution (condensate). The stored additional osmotic energy in the HIGH could be compared somewhat in an analogous way with the storage of potential energy (in a gravitational field). Osmotic energy is indeed often compared with the analogy of hydraulic energy available and stored in a barrage. As an example, the osmotic pressure of seawater is about 27 bar which corresponds to a water column of 270 m. It is indeed also the osmotic pressure that is used in PRO (Pressure Retarded Osmosis) to generate power while using osmosis through a semi-permeable membrane.

According to Post, when mixing a highly concentrated salt solution "HIGH" with a low concentration salt solution "CND" (condensate) into a salt solution corresponding to the SWRO brine "BR" , the Gibbs energy of mixing can be calculated from:

$$\Delta_{mix}G = \Delta G_{BR} - (\Delta G_{HIGH} + \Delta G_{CND}) \qquad (1)$$

Post assumes ideal salt solutions in a way that the Gibbs energy of mixing can be estimated from the change in molar entropy:

$$\Delta_{mix}G = -(n_{HIGH} + n_{CND}) \cdot T \cdot \Delta_{mix}s_{BR} - (-n_{HIGH} \cdot T \cdot \Delta_{mix}s_{HIGH} - n_{CND} \cdot T \cdot \Delta_{mix}s_{CND}) \quad (2)$$

with "n" the amount of moles and T the temperature (°K). $\Delta_{mix}s$ represents the contribution of the molar entropy of mixing (J/mol.°K) to the total molar entropy of the corresponding electrolyte solution when mixing the salt (ion) constituents "i" (Na, Cl, H2O, ...) according to :

$$\Delta_{mix}s = -R \cdot \sum x_i \cdot \ln(x_i) \qquad (3)$$

In Example II the situation for mixing 1 part of HIGH (at a salt concentration of about 265 kg/m$^3$) and 3 parts

of a salt solution at low concentration (condensate in principle) needs to be evaluated. Since a condensate however is in principle pure water and to be able to calculate the Gibbs free energy according to equations (1-3) it is adequate to approximate the situation by introducing a salt solution "CND" at a concentration of e.g. 0.005 M (= only 290 ppm of NaCl) instead of pure condensate. The calculation of the Gibbs energy of mixing for 1 part of HIGH and 3 parts of CND results in $\Delta_{mix}G$ = 1.125 kWh/m$^3$ mixture (SWRO brine), thus on the basis of either 1 m$^3$ of "condensate" or either 1 m$^3$ of "HIGH" evidently:

- $\Delta_{mix}G$ = 1.5 kWh/m$^3$ of CND when considering the CND as the basis
- $\Delta_{mix}G$ = 4.5 kWh/m$^3$ of HIGH when considering the HIGH as the basis

The remark was made above that the production of additional potable water within Example II is of prime importance. Expressing the osmotic energy effect on the basis of condensate is a fully relevant approach: it gives information on how much additional energy (as osmotic energy on top of the pure "latent heat of evaporation-latent heat of condensation" MVR related compressor energy consumption) the MVR-RHDE is extracting and storing as osmotic energy. It should be clear that this osmotic energy part is not lost in the process of the production of potable water but is stored in the HIGH (and thus can be extracted in a SGP-RE battery). In this Example II that additional amount of (osmotic related) energy is thus only 1.5 kWh/m$^3$ of condensate (non-lost energy !). When performing analogous model calculations according to the procedure, as already described for Example I, while using the same temperature conditions, the compression related energy consumption was also found to be about 20 kWh/m$^3$ of condensate. Therefore:

- in Example II, on the basis of the large fraction (3 parts) of condensate the osmotic (non lost) energy effect is merely about 7.5 % on the comparison basis of the non-osmotic (lost) energy contribution. The total compression energy would then be 21.5 kWh/m$^3$ of condensate;
- if the MVR-RHDE process could be optimized in Example II towards 10 kWh/m$^3$ of condensate of (lost) compression energy, the contribution of the (non-lost) osmotic energy would be 15 % on the comparison basis of the non-osmotic (lost) energy contribution. Therefore the total compression energy would then be 11.5 kWh/m$^3$ of condensate.

In Example II, on the basis of the smaller fraction (1 part) of HIGH (when compared to the 3 parts of condensate), the osmotic (non lost) energy effect of 4.5 kWh/m$^3$ of HIGH needs to be considered as a storage of useable osmotic energy.

Regarding the design of the MVR-RHDE installation to convert about 500 m$^3$/h of SWRO brine into about 370 m$^3$/h of potable water and 130 m$^3$/h of HIGH, the diameter of the hollow disks was assumed to be 4 m. The inter centre-to-centre distance between two disks was assumed to be 0.02 m in the simulation. The HIGH is at about 265 kg/m$^3$ while the SWRO brine is at about 70 kg/m$^3$.

At the evaporation location, the temperature Tb=60 °C. The pressure at the compressor entrance is 20000 Pa. A compressor ratio of 1.42 is assumed. On the basis of the Mollier diagram : Td=68 °C.

When having Tcw=25 °C the model simulation results in:

- To=34.7 °C
- condensate heat exchanger surface area Ad = 744 m$^2$
- concentrate heat exchanger surface area Ab = 416 m$^2$
- number of hollow disks : about 500 (calculation : 507)
- total horizontal length of the series of disks : about 10 m

Example II thus shows the basic feasibility of the MVR-RHDE concept when processing SWRO brine into a substantial volume (75 %) of condensate (extra potable water of high economical value in countries where seawater is converted into potable water through e.g. RO) and a substantial volume (25 %) of HIGH (to be used in a SGP-RE battery to produce electricity). Moreover, the VITO hybrid SGP-RE concept described in US 2008/0230376 also can solve the SWRO brine disposal brine problem which is very actual since disposing the highly concentrated SWDR brine in the sea or ocean evidently creates important ecological damage at the location of disposal (next to the destruction and wasting of valuable stored osmotic energy).

With respect to the use of solar energy to drive the MVR-RHDE and when again stressing the importance of the production of additional potable water (as possibly the main contributor toward "added (economical) value" of the VITO hybrid SGP-RE concept) it can be remarked that novel developments in the use of solar energy target Direct Steam Generation (DSG). DSG is in contrast with the systems as used in e.g. the Solar Energy Generating System, where oil is heated to 400 °C in the focal line of trough shaped mirrors which is then transferred to heat exchangers for the production of steam. In the DSG concept no intermediate heat transfer medium such as oil or molten salt is used. Steam is directly produced and transferred to a Rankine based steam driven turbine. The turbine then drives a generator to produce electricity. It is thus perfectly conceivable to use such a steam driven turbine on the basis of a solar based DSG system which directly drives the shaft of the compressor of an MVR-RHDE. In such a configuration the double power losses from first converting the steam turbine mechanical power into electricity and the conversion of that electricity back into mechanical power of the MVR-RHDE compressor (when driven through an electric motor) can be avoided. The steam driven turbine would then be driving directly the drive shaft of the MVR-RHDE compressor. Such a DSG steam turbine driven directly MVR-RHDE compressor does not seem to have been disclosed in the prior art. Since the solar energy is not available during night time, it is obvious that the osmotic energy stored in the HIGH can also be extracted during night time through the SGP-RE battery. The VITO hybrid SGP-RE concept thus allows storing solar energy for night time electricity production. Therefore the MVR-RHDE based production of HIGH in combination with the important additional production of potable water clearly emphasizes the high relevance of applying a MVR-RHDE concept within the VITO hybrid SGP-RE approach.

Information on solar energy based DSG can be found in multiple publications as e.g.:

- L. Valenzuela et al., Control scheme for direct steam generation in parabolic troughs under recirculation operation mode, Solar Energy 80 (2006) 1-17
- M.J. Montes et al., Performance of a direct steam generation solar thermal power plant for electricity production as a function of the solar multiple, Solar Energy 83 (2009) 679-689

<u>Simulation example III of the MVR-RHDE production of potable water from seawater (or brackish water)</u>

When considering the production of potable water from seawater it is obvious that a large amount of potable water originates from rainfall, then being gathered in rivers, lakes, etc. and groundwater. From such a perspective a very important amount of potable water, as harvested by men, originates from the evaporation by solar energy of salty ocean water and condensation (rain fall) over land. In that respect the MVR-RHDE is able to fulfill the very same function: evaporation of seawater and condensation into potable water while using solar energy as explained in Example II. In fact, when applying solar energy for DSG and when then using a steam driven turbine to activate the compressor of the MVR-RHDE, the same evaporation-condensation cycle as in nature can be performed, but now inside the MVR-RHDE installation.

When extracting potable water from seawater, two $m^3$ of seawater is typically converted into one $m^3$ of potable water and one $m^3$ of brine. In Example III simulation results are presented regarding such a conversion through MVR-RHDE. A seawater feed flow of about 1000 $m^3$/h (Mf=278 kg/sec) is considered to be converted into equal flows (500 $m^3$/h) of potable water and brine (Mb=Md=139 kg/sec). The theoretical full-time potable water production is thus 12000 $m^3$/day or 4.38 million $m^3$/year.

Comparable (disk geometry, temperature, ...) conditions are taken the same as in Example II. Thus at the evaporation location, the temperature Tb=60 °C. The pressure at the compressor entrance is 20000 Pa. Again, a compressor ratio of 1.42 is assumed. On the basis of the Mollier diagram : Td=68 °C.

When having Tcw=25 °C the model simulation results in :

- To=32.6 °C
- condensate heat exchanger surface area Ad = 1398 $m^2$
- concentrate heat exchanger surface area Ab = 2573 $m^2$
- number of hollow disks : 686
- total horizontal length of the series of disks : 13.7 m
- compressor energy consumption : about 20 kWh/$m^3$ of potable water on the basis of evaporation.

The additional specific (non-lost) osmotic energy contribution (in an analogous way as explained in Example II) is evidently much smaller when compared to the effect in Example II. In this case the situation is based on the mixing of 1 part of potable water and 1 part of brine (at e.g. a salt concentration of about 70 kg/$m^3$). The osmotic energy related energy values can be extracted from Figure 2 on page 5787 in
Jan Post, Energy Recovery from Controlled Mixing Salt and Fresh Water with a Reverse Electrodialysis System, Environ. Sci. Technol. 2008, 42, 5785-5790.

Mixing equal parts of river water and seawater shows a Gibbs energy of mixing of about 0.22 kWh/$m^3$ of mixture. When being based on the brine being produced, the (non-lost) stored osmotic energy is then about 0.44 kWh/$m^3$ of brine. When being based on the potable water the MVR-RHDE compressor thus needs to "provide" 0.44 kWh/$m^3$ of potable water on top of the (lost) compressor energy consumption of 20 kWh/$m^3$ of potable water (keeping in mind that the 0.44 kWh/$m^3$ is actually stored in the brine and can be recovered as explained in Example II through SGP-RE).

It is clear that next to the production of potable water from seawater, also brackish water can be converted into potable water.

It is also important to remark that the MVR-RHDE could in fact be used as a solar energy driven Seawater Desalination Unit (SWDU) as described in the VITO hybrid SGP-RE concept US 2008/0230376. In Figure 2 of this US application and reproduced in the present application in Fig. 9, the SWDU is shown to be possibly based on reverse osmosis but also possibly on thermal desalination methods (MSF = Multi Stage Flash; MED: Multi Effect Destillation; while the meaning of the "..." was clearly to also be associated with other types of thermal types of desalination). MVR-RHDE would also be a very good candidate as a thermally based desalination method and moreover based on self-sustainable, free solar energy.

An optimization towards a lower compressor energy consumption of e.g. 10 kWh/m$^3$ could be feasible by introducing a lower AT in the RHDE but then evidently at the cost of a larger installation and thus higher investment.

Hollow disk construction and evaporation

The concept of rotating hollow disks is technically feasible since for the drying of granular food products such devices are also used (Figure 8). Figure 8 shows a rotary disc dryer. It consists of a steam heated stationary cylindrical jacket and a steam heated rotor equipped with steam heated double walled discs perpendicular to the rotor which provide good agitation and heat transfer to a fish meal. The evaporated water is removed by air drawn through the dryer by a centrifugal fan. There is an air dome on the top of the dryer to allow for the passage of air and water vapour. The entire drying process may be watched through inspection windows. The meal discharge is controlled by a gate valve at the discharge opening. These dryers normally use steam at a pressure of 6 kg/cm$^2$ and are designed to remove up to 2 700 kg water per hour, corresponding to about 300 t of raw fish per 24 h. One of the advantages of disc dryers is their ability to dry stickwater concentrate together with presscake without deposits forming on the heating surfaces.

The method, as being described in this document, is however very different from the granular or powdery (food) drying application, at least in the following aspects:

- there is no MVR principle applied which is a major difference in method. Only externally produced steam is used and fed to the inside space of the hollow disks in order to transfer heat to the granular/powdery (food) product and in order to remove the moisture content from the product. In the granular/powdery product drying application only small amounts of water (remaining moisture in the food product) need to removed as to obtain a dry conservable food product and to protect the food from moisture related food deterioration and damage (growth of live threatening bacteria, fungi, ...).
- the geometry of the hollow disks based dryer of granulate shaped (food) products need to allow a good flow/transport of the dry products between the hollow disks which requires much larger inter-disk distances when compared to the water treatment MVR-RHDE based concept, as discussed previously in this document. Disks inter distance which are too small, will initiate the clogging of the products to dry. In the case of the MVR-RHDE concept to produce clean condensate and a concentrate from a fluid influent, such risk of clogging of course does not exist.
- also e.g. the use of textile in the case of the MVR-RHDE based concept is irrelevant in the dryer, as shown in Figure 8, of granular/powdery products.
- in the case of the MVR-RHDE based concept it is predominantly a very large volume of water which is evaporated (see Example I) while in the case of the drying of granular (food) products it is only a small amount of water which needs to removed from a moist solid.
- the hollow disk dryer in Figure 8 for drying granular products needs a sturdy build since the disks need to rotate in a nearly dry product and thus will be subjected to important frictional forces. In a MVR-RHDE evidently there are no substantial frictional forces since the disks rotate, moreover partly, in a fluid. The MVR-RHDE thus needs a much less sturdy build when compared to the installation presented in Figure 8 and thus can be designed in a more compact way to create a much higher active evaporation surface area on the installation's volume basis (m$^2$ of evaporation surface area per m$^3$ of MVR-RHDE).
- no concentrate outlet is present or necessary when drying granular food products. From these considerations, both device and method therefore are fully different from MVR-RHDE.

Figure 10 shows an example of an embodiment of a rotatably mounted heating element comprising the shape of a hollow disk, and in particular the inlets/outlets and the flow of the heating medium. Heating medium (13), e.g. compressed steam coming from a compressor, flows through a heating medium inlet channel (16) which is coaxial with the common horizontal axis onto which the heating elements are mounted, towards tubular heating medium inlets (14) into the internal passage (20) of a heating element (12). The heating medium may transfer heat via evaporation surfaces (18) indirectly to the liquid to be treated in the housing (19).

Hereby, the heating medium (13) may condense against the walls of the hollow disk and the condensate (3) may exit the heating element via tubular heating medium outlets (15) to a heating medium outlet channel (17) which is coaxial with the common horizontal axis and also the heating medium inlet channel.

## Claims

1. An indirect heat exchange evaporator device for liquid treatment by mechanical vapor recompression comprising

   - a fixed fluid-tight evaporator housing for containing liquid to be evaporated and vapor obtained by evaporating said liquid;
   - an inlet for feeding liquid to be evaporated into the housing and an outlet from the housing for liquid concentrated by evaporation;
   - an outlet from the housing for discharging from said housing vapor boiled off from the liquid by evaporation;
   - a plurality of heating elements within the housing mounted on a common horizontal axis, each of said heating elements having an outer surface for contact with said liquid to be evaporated within the housing and having an internal passage for heating medium and an element inlet and an element outlet for the heating medium, said element heating medium inlets opening on to a heating medium inlet channel defined within a wall for preventing liquid to be evaporated from entering the internal passages and said element heating medium outlets opening on to a heating medium outlet channel defined within a wall for preventing liquid to be evaporated from entering the internal passages;

   whereby said heating elements comprise an essentially hollow disc-like shape defining a heating element axis and a heating element plane substantially perpendicular thereto, said heating elements comprising a first essentially cylindrical evaporation surface and a second essentially cylindrical evaporation surface surrounding said internal passage, said evaporation surfaces substantially located along said heating element plane, whereby each of said heating elements is mounted along its heating element axis on said common horizontal axis within said housing.

2. An indirect heat exchange evaporator device according to claim 1, whereby at least one evaporation surface comprises a removable covering foil for easy maintenance.

3. An indirect heat exchange evaporator device according to any of the claims 1 to 2, whereby said inlet comprises a manifold with a supply system connected thereto for supplying the manifold with liquid to be evaporated, said manifold comprising a plurality of manifold openings in fluid connection with said evaporator housing, said manifold located above said heating elements and preferably at least one of said manifold openings being located directly above one or more heating elements for guiding liquid to be evaporated over the evaporation surfaces of said heating elements.

4. An indirect heat exchange evaporator device according to any of the claims 1 to 3, whereby said inlet channel and/or said outlet channel is located coaxially along said common horizontal axis.

5. An indirect heat exchange evaporator device according to any of the claims 1 to 4, whereby said device comprises means for rotating the heating elements and channels together with respect to the housing to successively submerge the heating elements in liquid and withdraw the heating elements from the liquid on the outer surfaces of the elements so that liquid is carried on the outer surfaces of the elements and falls down said outer surfaces of the elements as a film under the influence of gravity.

6. An indirect heat exchange evaporator device according to any of the claims 1 to 5, comprising an osmotic power generating system in connection with said outlet from the housing for liquid concentrated by evaporation for generating power.

7. An indirect heat exchange evaporator method for liquid treatment by mechanical vapor recompression, comprising the steps of:

   - providing in a fixed evaporator housing, a liquid to be evaporated;
   - introducing heating medium through interior spaces within a plurality of heating elements mounted about a common horizontal axis in said housing while preventing liquid to be evaporated from entering said interior space;
   - collecting vapor generated by evaporation in said housing and discharging collected vapor from said housing;

   whereby said heating elements comprise an essentially hollow disc-like shape defining a heating element axis and a heating element plane substantially perpendicular thereto, said heating elements comprising a first essentially cylindrical evaporation surface and a second essentially cylindrical evaporation surface surrounding said internal passage, said evaporation surfaces substantially located along said heating element plane, whereby each of said heating elements is mounted along its heating element axis on said common horizontal axis within said housing.

**8.** An indirect heat exchange evaporator method according to claim 7, whereby said liquid to be evaporated is provided via openings being located directly above one or more heating elements, thereby guiding liquid to be evaporated over the evaporation surfaces of said heating elements.

**9.** An indirect heat exchange evaporator method according to any of the claims 7 to 8, whereby said liquid to be evaporated is provided via an inlet in said housing which comprises a manifold with a supply system connected, said manifold comprising a plurality of manifold openings in fluid connection with said evaporator housing, said manifold located above said heating elements.

**10.** An indirect heat exchange evaporator method according to any of the claims 7 to 9, whereby liquid is provided such that a pool of liquid is formed in said housing, whereby at least part of a heating element is submerged in said pool.

**11.** An indirect heat exchange evaporator method according to any of the claims 7 to 10, whereby said heating elements are mounted for rotation about said common horizontal axis, and said method comprises the steps of:

- rotating the heating elements with respect to said housing about the common axis of rotation to successively submerge the heating elements in the liquid and to withdraw the heating elements from the liquid so that liquid flows down over outer surfaces of the heating elements as a film under the influence of gravity.

**12.** A system for water desalination by mechanical vapor recompression, comprising:

- an indirect heat exchange evaporator device according to any of the claims 1 to 6, comprising a housing with heating elements for evaporating salt water, capable of producing desalinated water at a heating medium outlet channel and brine at a housing outlet;
- an osmotic power generator connected to said housing outlet of said indirect heat exchange evaporator, capable of producing power from the energy available in the difference of salt concentration between said salt water and said brine.

**13.** A method for water desalination by mechanical vapor recompression, comprising the steps of:

- providing salt water to an indirect heat exchange evaporation system comprising a housing with heating elements for evaporating salt water, a heating medium outlet channel and a housing outlet;
- producing desalinated water at said heating medium outlet channel and producing brine at said housing outlet using an indirect heat exchange evaporator device according to any of the claims 1 to 6 and/or an indirect heat exchange evaporator method according to any of the claims 7 to 11;
- generate power by osmotic power generation using the difference in salt concentration between said brine and said salt water.

1
2
7
30
3
4
33
32
31
6
5

Fig. 1

34
35
7
4
37
39
36
8

Fig. 2

11
1
Feed
19
8
3
Condensate
12
Concentrate
6

Fig. 3

T-s diagram for steam
isobar P2
T3 : superheating
3
3-4 : condensation
isobar P1
4
T4
T1
1
2
2-3 : compression
1-2 : evaporation
Temperature
Entropy

Fig. 4

Specific enthalpy H (kJ/kg)
2800
2750
2700
Specific entropy S (kJ/kg.°K)
7.0
7.1
7.2
X=1
$P_2$ = 2.7 bar
$P_1$ = 1.9 bar
160 °C
130 °C
120 °C
2
2'
3
1

Fig. 5

7
8
Mf,
Tf
3
condensate
Md,
Td
9
Md,
To
3
concentrate
6
10
Mf,
Tcw
1
Mb,
Tb
6
Mb,
To

Fig. 6

Temperature
increase in the
compressor
condensate
(distillate)
brine
$T_s$
$T_d$
$T_b$
$T_v$
Temperature
(distillate)
brine
$T_f$
$T_o$
$T_{cw}$
feed
Thermodynamic
losses
Feed
preheater
Evaporator

Fig. 7

Fig. 8

Potable water
Electricity
Electricity
Concentrate
(brine)
SWDU unit
(RO / MSF / MED / ...)
SGP-RE
Sea water
Sea water
SGP-RE
effluent
Sea(water)

Fig. 9

20
18
12
18
19
3
14
3
15
15
16
13
13
3
3
3
13
13
15
17
15
14
3
3
12

Fig. 10

Europäisches
Patentamt
European
Patent Office
Office européen
des brevets

# EUROPEAN SEARCH REPORT

Application Number
EP 12 18 7498

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 409 576 A (TLEIMAT BADAWI [US]) 25 April 1995 (1995-04-25) * column 1, line 8 - line 29 * * column 4, line 21 - line 32 * * column 4, line 60 - column 5, line 13 * * column 5, line 41 - line 52 * * column 6, line 64 - line 68 * * claim 1; figures 1-4 * | 1-5,7-11 | INV. B01D1/22 B01D1/28 C02F1/04 C02F1/08 F03G7/00 |
| X | WO 2010/045069 A2 (KJELLMAN SAMUEL T [US]) 22 April 2010 (2010-04-22) * page 7, line 13 - page 9, line 25 * * page 10, line 20 - line 28 * * figures 3-4 * | 1-5,7-11 | |
| A | WO 2006/022507 A1 (LEE JONG-HWA [KR]) 2 March 2006 (2006-03-02) * paragraph [0024] - paragraph [0025] * * claim 1; figures 1-4 * | 1-5,7-11 | |
| A | US 3 200 051 A (SILVERN DAVID H) 10 August 1965 (1965-08-10) * claims 1-9; figures 1-5 * | 1-5,7-11 | TECHNICAL FIELDS SEARCHED (IPC) |
| A | US 3 136 707 A (HICKMAN KENNETH C D) 9 June 1964 (1964-06-09) * claims 1-13; figures 1-2 * | 1-5,7-11 | B01D C02F F03G |
| X | US 2011/044824 A1 (KELADA MAHER ISAAC [US]) 24 February 2011 (2011-02-24) * paragraph [0206]; figure 20a * * paragraph [0209] * | 6,12,13 | |
| A | WO 2011/053794 A2 (OASYS WATER INC [US]; MCGINNIS ROBERT L [US]; ZUBACK JOSEPH E [US]) 5 May 2011 (2011-05-05) * figures 8, 9 * | 6,12,13 | |

The present search report has been drawn up for all claims

| Place of search | Date of completion of the search | Examiner |
|---|---|---|
| The Hague | 18 September 2013 | García Alonso, Nuria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches
Patentamt
European
Patent Office
Office européen
des brevets

Application Number

EP 12 18 7498

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION
SHEET B**

Application Number

EP 12 18 7498

The Search Division considers that the present European patent application does not comply with the requirements of unity of invention and relates to several inventions or groups of inventions, namely:

1. claims: 1-5, 7-11

   heat exchange evaporator device

   ---

2. claims: 6, 12, 13

   water desalination system for generating power by osmotic power generation

   ---

## ANNEX TO THE EUROPEAN SEARCH REPORT ON EUROPEAN PATENT APPLICATION NO. EP 12 18 7498

This annex lists the patent family members relating to the patent documents cited in the above-mentioned European search report. The members are as contained in the European Patent Office EDP file on
The European Patent Office is in no way liable for these particulars which are merely given for the purpose of information.

18-09-2013

| Patent document cited in search report | Publication date | Patent family member(s) | Publication date |
|---|---|---|---|
| US 5409576 A | 25-04-1995 | NONE | |
| WO 2010045069 A2 | 22-04-2010 | CN 102186778 A | 14-09-2011 |
| | | EP 2361226 A2 | 31-08-2011 |
| | | JP 2012505751 A | 08-03-2012 |
| | | US 2010243425 A1 | 30-09-2010 |
| | | WO 2010045069 A2 | 22-04-2010 |
| WO 2006022507 A1 | 02-03-2006 | CN 101052447 A | 10-10-2007 |
| | | JP 2008510613 A | 10-04-2008 |
| | | WO 2006022507 A1 | 02-03-2006 |
| US 3200051 A | 10-08-1965 | NONE | |
| US 3136707 A | 09-06-1964 | NONE | |
| US 2011044824 A1 | 24-02-2011 | NONE | |
| WO 2011053794 A2 | 05-05-2011 | AU 2010313335 A1 | 10-05-2012 |
| | | CA 2779831 A1 | 05-05-2011 |
| | | CN 102740954 A | 17-10-2012 |
| | | EA 201290251 A1 | 30-11-2012 |
| | | EP 2493595 A2 | 05-09-2012 |
| | | JP 2013509298 A | 14-03-2013 |
| | | KR 20120112432 A | 11-10-2012 |
| | | US 2012267306 A1 | 25-10-2012 |
| | | WO 2011053794 A2 | 05-05-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5575889 A
- DE 4036345
- US 2008230376 A
- US 20080230376 A


### Non-patent literature cited in the description


- **E. BRAUNS.** Naar herwinning van proceswater via verdamping. *Het Ingenieursblad,* November 2004
- **H.T. EL-DESSOUKY ; H.H. ETTOUNEY.** Fundamentals of Salt Water Desalination. Elsevier, 2002
- **N. LUKIC.** Economical aspects of the improvement of a mechanical vapor compression desalination plant. *Desalination,* 2010, vol. 264, 173-178
- **J. VEZA.** Mechanical vapor compression desalination plants - A case study. *Desalination,* March 1995, vol. 101 (1
- **H.T. EL-DESSOUKY ; H.M. ETTOUNEY.** Fundamentals of Salt Water Desalination. Elsevier, 2002, 81-109
- **E. BRAUNS.** Towards a worldwide sustainable and simultaneous large scale production of renewable energy and potable water through salinity gradient power by combining reversal electrodialysis and solar power?. *Desalination,* 2008, vol. 219, 312-323
- **E. BRAUNS.** Salinity gradient power by reverse electrodialysis: effect of model parameters on electrical power output. *Desalination,* 2009, vol. 237, 378-391
- **E. BRAUNS.** An alternative hybrid concept combining seawater desalination, solar energy and reverse electrodialysis for a sustainable production of sweet water and electrical energy. *Desalination and Water Treatment,* 2010, vol. 13, 53-62
- **E. BRAUNS.** An alternative hybrid concept combining seawater desalination, solar energy and reverse electrodialysis for a sustainable production of sweet water and electrical energy. *Desalination and Water Treatment,* 2010, vol. 13
- **JAN POST.** Energy Recovery from Controlled Mixing Salt and Fresh Water with a Reverse Electrodialysis System. *Environ. Sci. Technol.,* 2008, vol. 42, 5785-5790
- **L. VALENZUELA et al.** Control scheme for direct steam generation in parabolic troughs under recirculation operation mode. *Solar Energy,* 2006, vol. 80, 1-17
- **M.J. MONTES et al.** Performance of a direct steam generation solar thermal power plant for electricity production as a function of the solar multiple. *Solar Energy,* 2009, vol. 83, 679-689